# EUROPÄISCHE PATENTSCHRIFT

(11) **EP 0 809 343 B1**
(45) Veröffentlichungstag und Bekanntmachung des Hinweises auf die Patenterteilung: **02.11.2000**
(21) Anmeldenummer: 97108023.9
(22) Anmeldetag: 16.05.1997
(51) Int. Cl.: H02K 1/27, H02K 19/06, H02K 1/06

(54) **Dauermagneterregte Synchronmaschine**
Synchronous machine excited by permanent magnets
Machine synchrone excité par aimant permanent

(30) Priorität: 21.05.1996 DE 19620438
(43) Veröffentlichungstag der Anmeldung: 26.11.1997
(73) Patentinhaber: SIEMENS AKTIENGESELLSCHAFT, 80333 München (DE)
(72) Erfinder: Vollmer, Rolf, Dipl.-Ing., 36129 Gersfeld (DE); Sopp, Helmut, 97650 Fladungen (DE); Binder, Andreas, Dr., 97618 Hohenroth (DE)

(56) Entgegenhaltungen:
- DE-B- 1 186 944
- US-A- 4 939 398

## Beschreibung

Die Erfindung betrifft eine dauererregte Synchronmaschine gemäß dem Oberbegriff des Anspruches 1.

Eine solche Maschine ist durch das DE-U-88 16 122 bekannt. Bei dieser Maschine sind die Dauermagnete am Umfang des Läuferblechpaketes angeordnet. Zur sicheren Halterung der Magnete, insbesondere bei hohen Drehzahlen, ist ein aus amagnetischem Material bestehender Zylinder über die Dauermagnete geschoben. Dies erfordert einen erheblichen Fertigungsaufwand, da dieser Zylinder drehfest mit dem Läufer verbunden werden muß. Die über den Umfang des Läufers gleichmäßig verteilte Anordnung der Dauermagnete führt außerdem zu keiner optimalen elektrischen Ausnutzung der Maschine.

Die US-A-4 939 398 beschreibt eine dauermagneterregte Synchronmaschine mit einem Ständer, der eine Wicklung aufweist und einen Läufer, der mit Dauermagneten bestückt ist. Die Dauermagnete sind den Aufnahmeöffnungen eingesetzt, wobei die Umfangskontur der Aufnahmeöffnung geschlossen ist. Jede Pollücke weist einen radial gerichteten Streuschlitz dabei auf. Die Dauermagnete sind V-förmig angeordnet und weisen in ihrer Mitte eine maximale und an ihrem Ende einen minimalen Abstand zum Außenumfang des Läuferblechpakets auf.

Nachteilig dabei ist, daß trotz dieser konstruktiven Merkmale das Magnetfeld nicht sinusförmig verläuft und demzufolge die Polkräfte asymmetrisch auftreten. Damit werden elektromagnetische Schwingungen angeregt.

Der Erfindung liegt die Aufgabe zugrunde, eine dauermagneterregte Synchronmaschine der gattungsgemäßen Art so weiterzubilden, daß diese trotz der Auslegung für hohe Drehzahlen mit wesentlich geringerem Fertigungsaufwand herstellbar ist und verbesserte elektrische Eigenschaften aufweist. Es wird u.a. eine vergleichsweise verbesserte Überlastfähigkeit und ein erweiterter Drehzahlbereich der Synchronmaschine angestrebt.

Die Lösung der gestellten Aufgabe gelingt durch die im Kennzeichen des Anspruches 1 angegebenen Merkmale. Durch das Einbringen der Dauermagnete in die Aufnahmeöffnungen des umfangsmäßig geschlossenen Läuferblechpaketes sind die Dauermagnete gegen die Fliehkraftbeanspruchung bei hohen Drehzahlen geschützt. Durch die entsprechende räumliche Anordnung der Dauermagnete je Pol der Maschine wird eine Flußsperre für das ständerstromerregte Ankerquerfeld und ferner von einem Pol zum anderen Pol über die Pollücke hinweg ein Bypass für einen feldschwächenden Ständerfluß erreicht.

Dadurch, daß die Außenkontur des Läuferblechpaketes so gestaltet ist, daß der zwischen dem Läufer und dem Ständer bestehende Luftspalt in der Polmitte am kleinsten ist und sich zu den Pollücken hin vergrößert, wird zumindest ein annähernd sinusförmiger Verlauf des Magnetfeldes erreicht. Dies führt zu gleichmäßigen, symmetrischen Polkräften, so daß die elektromagnetischen Kraft- und Schwingungsanregungen minimiert sind. Damit wird die Maschine insgesamt sehr schwingungsstabil. Ein weiterer wesentlicher Aspekt des sich zu den Pollükken hin vergrößernden Luftspaltes ist die Behinderung des Ankerquerfeldes und die Verminderung der Querinduktivität.

Die entsprechende Gestaltung der Außenkontur des Läuferblechpaketes wird in einfacher Weise durch einen abgeflachten Verlauf zwischen den Polmitten erzielt. Der Luftspalt zwischen dem Läufer und dem Ständer ist somit in der Polmitte am kleinsten, so daß hier eine hohe maximale Luftspaltinduktion gegeben ist, woraus wiederum ein hohes Drehmoment/Stromverhältnis resultiert. Weiterhin läßt sich die Außenkontur des Läuferblechpaketes in Verbindung mit der Ständerbohrung als Strömungskanal für eine eventuelle Durchzugsbelüftung nutzen.

Insbesondere bei Maschinen mit einer Polpaarzahl gleich oder größer 2 ermöglicht die beschriebene räumliche Anordnung der Dauermagnete im Läuferblechpaket die Ausbildung der Welle des Läufers als Hohlwelle. Eine Ausführung mit Hohlwelle ist besonders für den Einsatz der Maschine im Werkzeugmaschinenbereich günstig, da durch die Hohlwelle hindurch ein Zugriff zu der Werkzeugmaschine besteht.

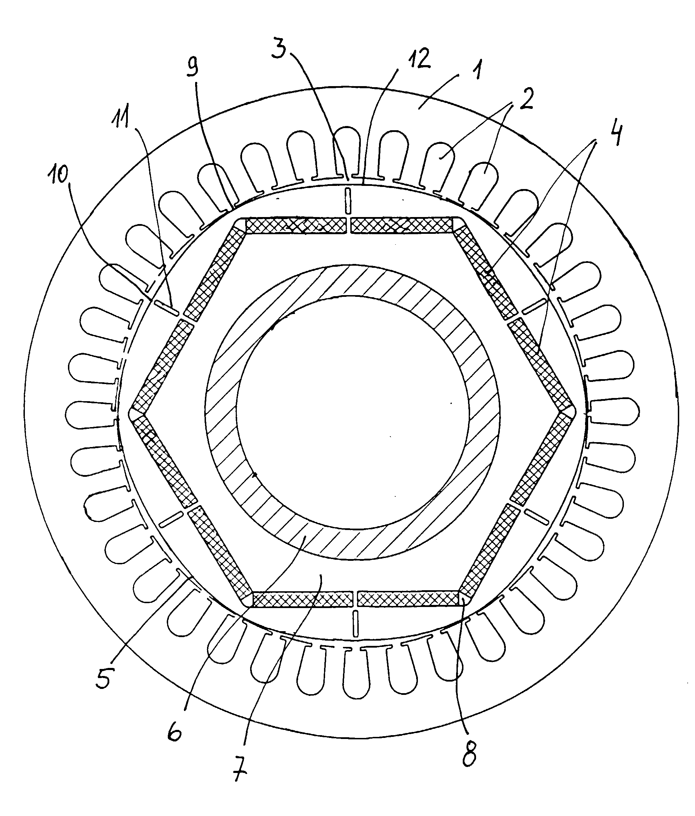

Anhand einer in der Zeichnung im Schnitt dargestellten elektrischen Maschine wird die Erfindung nachfolgend näher beschrieben.

Mit 1 ist der Ständer einer elektrischen Synchronmaschine bezeichnet, in dessen Ständernuten 2 eine in der Zeichnung nicht dargestellte Ständerwicklung eingebracht ist. In der Ständerbohrung 3 ist ein durch Dauermagnete 4 erregter Läufer 5 angeordnet, der mittels einer Hohlwelle 6 in entsprechenden, am Ständer angebauten Lagerschilden drehbar gelagert ist. Auf die Hohlwelle 6 ist das Läuferblechpaket 7 des Läufers 5 aufgebracht.

In dem Läuferblechpaket 7 sind je Pol zwei schlitzförmige Aufnahmeöffnungen 8 vorgesehen, in die Dauermagnete 4 eingesetzt sind. Der räumliche Verlauf der beiden Aufnahmeöffnungen 8 eines Pols ist so gestaltet, daß die Aufnahmeöffnungen 8 mit ihrem einen Ende zur Polmitte 9 hin möglichst nahe bis an den Außenumfang des Läuferblechpaketes 7 heranreichen. Das andere, sich zur Pollücke 10 hin erstreckende Ende der Aufnahmeöffnungen 8 weist dagegen in bezug auf den gesamten Verlauf der Aufnahmeöffnungen 8 den größten Abstand zum Außenumfang des Läuferblechpaketes 7 auf. In den Pollücken 10 der Maschine ist jeweils noch ein Streuschlitz 11 vorgesehen. Außerdem weist das Läuferblechpaket 7 an seinem Außenumfang von einer Polmitte 9 zu der anderen Polmitte 9 einen abgeflachten Verlauf 12 auf. Dadurch ergibt sich in der Polmitte 9 die kleinste Luftspaltweite. Von der Polmitte 9 zu den Pollücken 10 hin nimmt die Luftspaltweite zu und erreicht in der Pollücke 10 ihren größten Wert.

Durch den beschriebenen Verlauf der Aufnahmeöffnungen 8 im Bereich eines Pols ergibt sich in der Polmitte 9 hinsichtlich des magnetischen Querschnittes der Läuferbleche eine Engstelle. Die Engstelle wirkt als Flußsperre für das vom Ständerstrom erregte Ankerquerfeld. Damit wird der Einfluß des Ankerquerfeldes auf das Maschinenverhalten geschwächt. Dies führt dazu, daß auch bei einem weiten Stromstellbereich der Maschine noch ein weitgehend linearer Zusammenhang zwischen Strom und Drehmoment erhalten bleibt. Zu der zwischen zwei Polen liegenden Pollücke 10 hin steigt der magnetische Querschnitt der Läuferbleche an. Damit besteht zwischen zwei Polmitten 9 ein Bypass für einen vom Ständer her induzierten feldschwächenden Fluß. Dies bedingt einerseits einen relativ geringen Strombedarf für eine zur Drehzahlsteuerung notwendige Feldschwächung, andererseits wird ein weiter Drehzahlstellbereich ermöglicht.

Die unterschiedlichen magnetischen Querschnitte in den Polmitten 9 und den Pollücken 10 führen zur Verminderung der Querinduktivität, wodurch sich eine entsprechende Erhöhung des Kippmomentes der Maschine ergibt. Die Maschine weist dadurch eine große Überlastfähigkeit auf.

## Patentansprüche

1. Dauermagneterregte Synchronmaschine, die einen mit einer Wicklung versehenen Ständer (1) und einen mit Dauermagneten (4) bestückten Läufer (5) aufweist, **dadurch gekennzeichnet**, daß die Dauermagnete (4) in entsprechende Aufnahmeöffnungen (8) eingesetzt sind, die in dem eine geschlossene Umfangskontur aufweisenden Blechpaket (7) des Läufers (5) vorgesehen sind, wobei die Anordnung der Dauermagnete (4) je Pol so getroffen ist, daß diese in der Polmitte (9) einen minimalen und in der Pollücke (10) einen maximalen Abstand zum Außenumfang des Läuferblechpaketes (7) aufweisen, daß ferner in jeder Pollücke (10) ein radial gerichteter Streuschlitz (11) vorgesehen ist und daß die Außenkontur des Läuferblechpakets (7) so gestaltet ist, daß der zwischen dem Läufer (5) und dem Ständer (1) bestehende Luftspalt in der Polmitte (9) am kleinsten ist und sich zu den Pollücken (10) hin vergrößert.

2. Synchronmaschine nach Anspruch 2, **dadurch gekennzeichnet**, daß das Läuferblechpaket (7) an seinem Außenumfang zwischen den Polmitten (9) einen abgeflachten Verlauf (12) aufweist.

3. Synchronmaschine nach einem der vorhergehenden Ansprüche, **dadurch gekennzeichnet**, daß die Welle des Läufers als Hohlwelle (6) ausgebildet ist.

## Claims

1. Permanent-field synchronous machine, which has a stator (1) provided with a winding and a rotor (5) equipped with permanent magnets (4), characterised in that the permanent magnets (4) are inserted into corresponding location openings (8) which are provided in the laminated core (7) of the rotor (5), which laminated core has a closed peripheral contour, the arrangement of the permanent magnets (4) per pole being made in such a way that the latter have a minimum distance with respect to the outer periphery of the laminated rotor core (7) in the pole centre (9) and have a maximum distance with respect thereto in the pole gap (10), in that there is further provided in each pole gap (10) a radially directed leakage slit (11), and in that the outside contour of the laminated rotor core (7) is designed in such a way that the air gap which exists between the rotor (5) and the stator (1) is smallest in the pole centre (9) and increases towards the pole gaps (10).

2. Synchronous machine according to claim 2, characterised in that the laminated rotor core (7) has at its outer periphery, between the pole centres (9), a flattened shape (12).

3. Synchronous machine according to one of the preceding claims, characterised in that the shaft of the rotor is constructed as a hollow shaft (6).

## Revendications

1. Machine synchrone excitée par aimant permanent, qui comporte un stator (1) muni d'un enroulement et un rotor (5) muni d'aimants (4) permanents, caractérisée en ce que les aimants (4) permanents sont introduits dans des ouvertures (8) de réception correspondantes qui sont prévues dans un paquet (7) de tôles du rotor (5) ayant un contour périphérique fermé, la disposition des aimants (4) permanents étant choisie pour chaque pole de telle manière que ceux-ci sont au centre (9) de pole à une distance minimum du pourtour extérieur du paquet (7) de tôles rotoriques et sont dans l'espace (10) interpolaire à une distance maximale du pourtour extérieur du paquet (7) de tôles rotoriques, en ce qu'il est prévu de plus dans chaque espace (10) interpolaire une fente (11) de fuite dirigée radialement et en ce que le contour extérieur du paquet (7) de tôles rotoriques est conformé de telle manière que l'entrefer existant entre le rotor (5) et le stator (1) est le plus petit au centre (9) du pole et s'agrandit en direction des espaces (10) interpolaires.

2. Machine synchrone suivant la revendication 1, caractérisée en ce que le paquet (7) de tôles rotoriques comporte sur son pourtour extérieur entre les centres (9) de pole un tracé (12) aplati.

3. Machine synchrone suivant l'une des revendications précédentes, caractérisée en ce que l'arbre du rotor est réalisé en arbre (6) creux.
